Europäisches Patentamt

European Patent Office

Office européen des brevets

(11) Publication number: 0 359 193
A2

## (12) EUROPEAN PATENT APPLICATION

(21) Application number: 89116840.3

(22) Date of filing: 12.09.89

(51) Int. Cl.5: F16K 17/196

(30) Priority: 15.09.88 SE 8803252

(43) Date of publication of application:
21.03.90 Bulletin 90/12

(84) Designated Contracting States:
DE FR GB IT SE

(71) Applicant: Garphyttan Haldex AB
Box 501
S-261 24 Landskrona(SE)

(72) Inventor: Lhota, Jiri Eduard Josef
Salviagatan 45
S-253 74 Helsingborg(SE)

(74) Representative: Petri, Stellan
c/o SAB NIFE AB Box 515
S-261 24 Landskrona(SE)

(54) An air drier valve.

(57) An air drier valve for venting either one of two
drying towers (7, 8) to the atmosphere has a valve
body (30) movable in a bore (33), which is con-
nected to the atmosphere and opens to the towers
with its two ends. The valve body consists of a valve
stem (31) with two valve heads (32) for sealing
engagement with seats (37) at the bore ends. The
dimensioning is according to the invention such that
in the rest position both valve heads are in sealing
engagement with the seats, and there is elastic yield
between the seats and the valve heads. In this way
the change-over of the valve is entirely made depen-
dent on the pressure difference between the towers.

Fig.5

EP 0 359 193 A2

# AN AIR DRIER VALVE

## Technical Field

This invention relates to an air drier valve for venting either one of two drying towers to the atmosphere. The valve has a valve body, which is movable relative to a bore, connected to the atmosphere and opening to the towers with its two ends, and which consists of a valve stem with two valve heads for sealing engagement with seats at the bore ends.

## Technical Background

In an air drier with two drying towers either one of the towers is used for drying air, while the second one is being regenerated by a small portion of the air dried in the first tower. This regeneration air is - after having fulfilled its purpose - vented out to the atmosphere in a moisture-laden condition through a valve, with which this invention is concerned.

The switch-over between the two towers is controlled by other means, as is well known in the art, whereas the actual valve is governed by the conditions in the air drier prevailing as a result of said switch-over; the valve may accordingly be called a slave valve.

A prior art valve for the purpose referred to above is of the normal type where the valve body actually moves from one position to the other and where at least one of the valve heads is at a distance from its seat in a rest condition. This valve type is mainly dependent on a certain flow for its change-over and may under certain conditions not function as distinctly and properly as desired.

## The Invention

A far better function for a valve of the type set out above may according to the invention be attained in that the distances, counted in the axial direction of the bore, between the sealing surfaces of the seats and of the valve heads correspond to each other and in that there is elastical yield between the seats and the valve heads.

The result of this is that in the rest position both valve heads are in sealing engagement with their seats and that accordingly it is a pressure difference between the two towers (and not a flow in one of them) that accomplishes an opening of one of the towers - the tower with the lowest pressure - to the atmosphere through the valve.

In one embodiment the elastical yield is attained by valve seats made of rubber, normally used for such purposes, whereas the valve housing is provided with a depression behind each valve seat. The elastical valve seat together with its valve head can deflect into this depression under the pressure in the related tower.

Preferably each seat is provided with a lip for sealing engagement with its valve head. The pressure accordingly acts on the seat on the area defined between this lip and the outer rim of the depression.

In another and preferred embodiment the valve heads (instead of the valve seats) are built up of a material with elastic properties. Each valve head can hereby comprise a rubber cover with two internal guide sleeves biased apart by a spring for providing safe sealing engagement between the seat and the rubber cover, which preferably has a sealing lip.

## Brief Description of the Drawings

The invention will be described in further detail below reverence being made to the accompanying drawings, in which

Fig 1 is an over-all view of parts of a compressed air system, for example on a heavy road vehicle,

Fig 2 is a side-view of an air drier forming part of the system of Fig 1,

Fig 3 is a cross-section through a conventional valve in such an air drier,

Fig 4 is a cross-section to a larger scale of a first embodiment of a similar valve according to the invention, and

Fig 5 is a cross section to an even larger scale of a second and preferred embodiment of a valve according to the invention.

## Detailed Description of Practical Embodiments

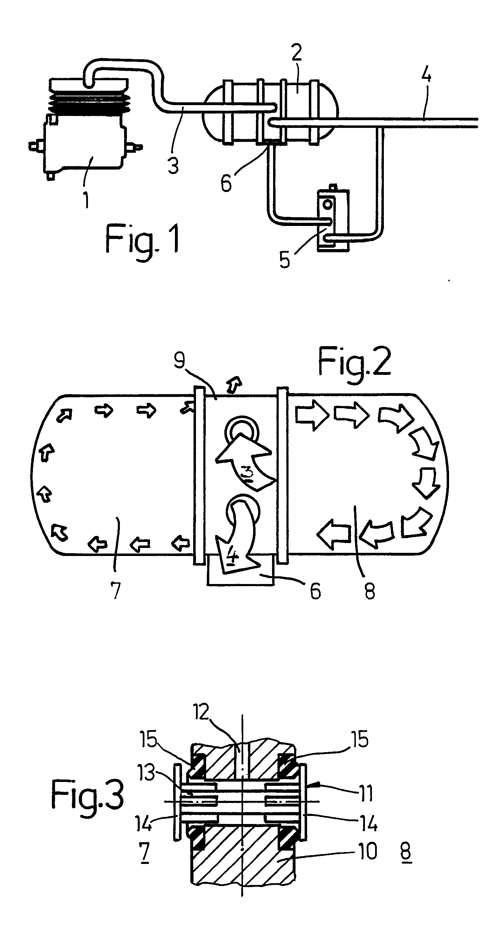

A compressed air system, typically but not exclusively to be used on heavy road vehicles, contains - as shown in Fig 1 - an air drier 2 (to be briefly described below), a line 3 from the compressor to the air drier, and a line 4 from the air drier to an air tank (not shown). When a certain working pressure is established and maintained in this air tank and thus in the line 4, a governor valve 5 provides a signal to an unloader valve 6 integrated in the air drier 2 for venting the air supplied by the compressor into the atmosphere.

Generally speaking and as shown in Fig 2 the air drier consists of a left drying tower 7, a right drying tower 8, and a centre part 9 containing valves and other means needed for the proper function of the air drier. Each drying tower 7 and 8 contains a filter and desiccant in a cartridge.

In use the compressed air flows through one of the towers to be dried (in Fig 2 the right tower 8 as illustrated by bigger arrows). At the same time the other tower is regenerated, i.e. the desiccant therein is dried from the moisture adsorbed at its previous air drying cycle. The regeneration is performed in that a small amount of the dried air delivered from the air drier is passed through the tower to be regenerated and is then vented out to the atmosphere (as is illustrated by smaller arrows in the left tower 7 in Fig 2).

The switch-over between the two towers occurs automatically at each signal in the form of a certain over-pressure in the line from the governor valve 5 to the unloader valve 6. In this way the air drier is always prepared for air treatment of large or small volumes.

With the exception of the valve according to the invention no description of the valves and means in the centre part 9 is made, as such description is not required for a proper understanding of the invention.

A conventional valve for directing regenerating air from the tower under regeneration to the atmosphere is shown in Fig 3. It is arranged in partition wall 10 (in the centre part 9, Fig 2) between the two towers 7 and 8. A valve body 11 is movable in a bore through the wall 10. This bore is vented to the atmosphere by a conduit 12. The valve body 11 consists of a stem 13 with two valve heads 14 sealingly cooperating with either one of two rubber valve seats 15 in the wall 10. The distance between the valve heads 14 is greater than that between the sealing surfaces of the seats 15.

This valve will normally be closed towards the tower where the drying occurs and open to the tower under regeneration for outlet of moist air through the conduit 12. The situation shown in Fig 3 corresponds to that shown in Fig 2.

In view of the fact that this valve is completely governed by the position of other valves (not shown) it may be called a slave valve.

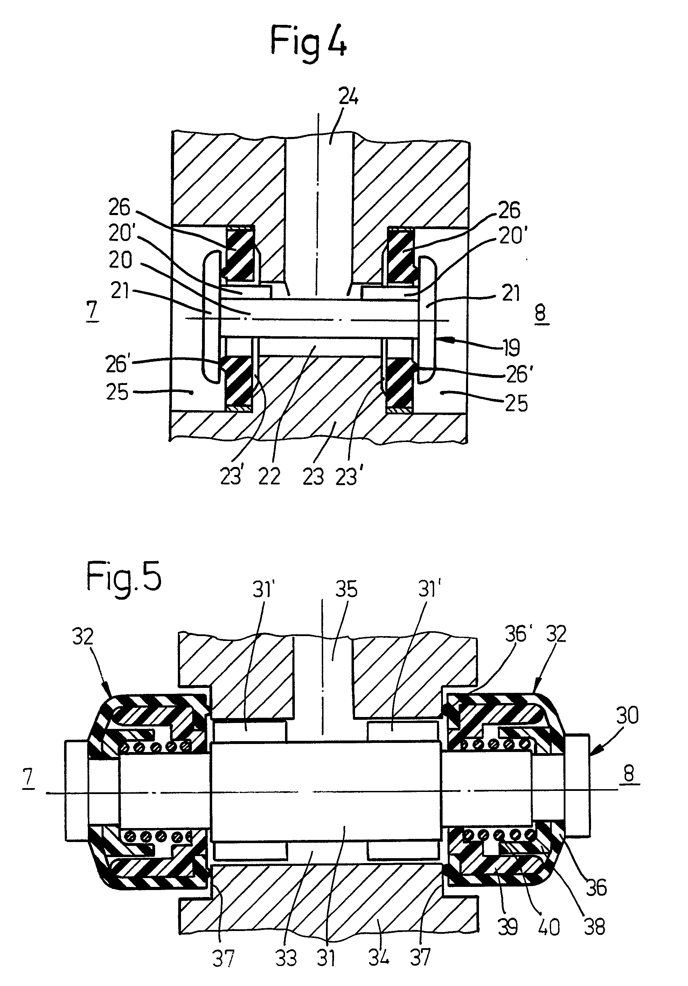

A first embodiment of an an improved such valve is shown in Fig 4. Again, a valve body 19 consisting of a valve stem 20 with a valve head 21 at each end is movable in a through bore 22 in a partition wall 23 between two towers 7 and 8. This bore 22 is vented to the atmosphere by a conduit 24. The valve stem 20 is provided with projections 20′ around its periphery for its guiding in the bore 22.

Around the bore 22 (in recesses 25) are arranged two valve seats 26 of rubber or similar elastic material. Each seat 26 is provided with a lip 26′ for sealing engagement with its corresponding valve head 21. The valve is shown in its rest position; please note that both valve heads 21 are in sealing contact with the seat lips 26′. Behind each seat 26 in the partition wall 23 there is a shallow circular depression 23′, whose diameter is greater than that of the lip 26′.

By the fact that the valve body 11 in the conventional valve design according to Fig 3 is completely free to take any position and that its movement into sealing contact with the desired seat 15 for the intended function of the air drier is dependent on a certain air flow past one of the valve heads 14 for creating an under-pressure, the proper function of the valve cannot be guaranteed. Also contaminants and frictions may cause problems.

In the improved design according to Fig 4 on the other hand the dimensioning is such that in the rest position (as shown) both valve heads 21 are in sealing contact with its respective seats 26. At a certain pressure difference between the two sides of the valve body 19, say 0.7 bar, the valve body can yield to the higher pressure due to the elasticity of the valve seat 26 and with its valve head 21 at the side with the lower pressure leave the seat 26 allowing air to pass out through the conduit 24. The pressure acts on the elastic seat on the area between the seat lip 26′ and the outer periphery of the depression 23′.

A preferred embodiment of a slave valve is shown in Fig 5. Again, a vale body 30 consisting of a valve stem 31 with a valve head 32 at each end is movable in a through bore 33 in a partition wall 34 between two towers 7 and 8. This bore 33 is vented to the atmosphere by a conduit 35. The valve stem 31 is provided with projections 31′ around its periphery for its guiding in the bore 33.

In the Fig 4 version described above the valve seats 26 are made of elastic material, whereas in the Fig 5 embodiment the valve heads 32 are the elastic members. This elasticity is accomplished in the following way (only the right hand valve head in Fig 5 is provided with numerals):

Each valve head has a rubber cover 36 for sealing engagement with a seat 37 of the partition wall 34, preferably by means of a lip 36′. Inside the rubber cover 36 are an inner guide sleeve 38 and an outer guide sleeve 39, which is biased in the direction away from the inner guide sleeve 38 - held to the valve stem 31 together with the rubber cover 36 - by a relatively weak spring 40. The guide sleeves 38 and 39 are preferably made of a plastics material.

It is obvious that this improved slave valve (in its two embodiments) is truly pressure dependent (as opposed to the conventional valve, which is flow dependent) and that its change-over is always distinct and in the desired direction. In the rest position it is closed, which is an added advantage.

Modifications are possible within the scope of the appended claims.

## Claims

1. An air drier valve for venting either one of two drying towers (7, 8) to the atmosphere, having a valve body (19; 30), which is movable relative to a bore (22; 33), connected to the atmosphere and opening to the towers with its two ends, and consists of a valve stem (20; 31) with two valve heads (21; 32) for sealing engagement with seats (26; 37) at the bore ends, **characterized** in that the distances, counted in the axial direction of the bore (22; 33), between the sealing surfaces of the seats (26; 37) and of the valve heads (21; 32) correspond to each other and in that there is elastical yield between the seats and the valve heads.

2. A valve according to claim 1, **characterized** in that the valve seats (26)are made of rubber or similar elastic material (Fig 4).

3. A valve according to claim 2 **characterized** in that the valve housing (23)is provided with a depression (23') behind each valve seat (26).

4. A valve according to claim 2 or 3, **characterized** in that each seat (26) is provided with a lip (26') for sealing engagement with its valve head (21).

5. A valve according to claim 1, **characterized** ain that the valve heads (32)are built up of material with elastic properties (Fig 5).

6. A valve according to claim 5, **characterized** in that each valve head (32) is built up of a rubber cover (36) with two internal guide sleeves (38, 39) biased apart by a spring (40) for providing safe sealing engagement between the seats (37) and the rubber cover, which preferably has a sealing lip (36').

Fig. 1

Fig.2

Fig.3

Fig 4

Fig.5